# EUROPEAN PATENT SPECIFICATION

(11) **EP 0 507 361 B1**
(45) Date of publication and mention of the grant of the patent: **18.10.1995**
(21) Application number: 92200428.8
(22) Date of filing: 14.02.1992
(51) Int. Cl.: C01F 11/02, C04B 2/06

(54) **Method of deactivating slag material containing calcium oxide granules**
Verfahren zum Desaktivieren einer Kalziumoxidgranulat enthaltende Schlacke
Procédé de désactivation d'une scorie contenant des granules d'oxyde de calcium

(30) Priority: 18.02.1991 NL 9100280
(43) Date of publication of application: 07.10.1992
(73) Proprietor: PELT & HOOYKAAS B.V., 3087 AA Rotterdam (NL)
(72) Inventor: Hooykaas, Carel Willem Jan, NL-3062 BT Rotterdam (NL)
(74) Representative: van der Kloet-Dorleijn, Geertruida W.F., Drs.

(56) References cited:
- EP-A- 0 135 147
- EP-A- 0 234 279
- DE-B- 1 302 612
- DE-B- 2 549 502
- US-A- 3 717 490
- CHEMICAL ABSTRACTS, vol. 108, no. 4, Columbus, Ohio, US; abstract no. 26363, NAKAMURA ET AL.: 'TREATMENT OF SLOWLY COOLED BLAST-FURNACE SLAG FOR PAVEMENTS' page 288 ;

## Description

The invention relates to a method of deactivating granules containing at least calcium oxide present in slag material by bringing the slag material, optionally at elevated temperature, into contact with water.

Such a method is generally used to convert the calcium oxide granules present in the slag material into slaked lime since the incorporation of slag material containing unslaked calcium oxide granules in road construction materials gives rise to undesirable deformation of the road surface during the subsequent conversion of calcium oxide.

In this known method, the slag material is passed through a water basin which is at a temperature of, for example, 40°C. However, because of a thin layer which is formed on the calcium oxide granules which prevents water permeation, it takes a fairly long time, usually approximately two months at 40°C, for the calcium oxide to be deactivated at calcium hydroxide.

The drawbacks of this known method are that the basins used have to be fairly large, while the water remaining after the treatment cannot be immediately discharged into the environment but has first to be subjected to expensive regeneration treatments.

An alternative to this is to allow the slag material to break down in air. In that case, however, a period of 6 to 9 months is then necessary. Apart from the large storage capacity which is also required in that case, measures have to be taken to prevent the ground and surface water from being contaminated by the slag material being leached out.

A method has now been found for rapidly deactivating calcium oxide in slag material containing calcium oxide granules, as a result of which large basins and storage spaces are no longer necessary and which therefore results in an appreciable saving.

The method according to the invention is characterised by the fact that magnesium containing slag material optionally in comminuted form, is brought into contact with water in the presence of a magnesium complexing agent or clathrate to prevent the formation of the thin layer which retards water permeation around the said granules.

According to the present method, it has been found possible to deactivate waste material containing calcium oxide granules in a time period of a few hours despite the presence of a thin layer which retards water permeation around said granules. This could be effected because it was found that said undesirable layer was formed due to the presence of magnesium in the said granules. In the absence of any magnesium added in the process, said magnesium probably originates from the material used as furnace lining material.

Expediently, the slag material is deactivated at elevated temperature, preferably at a temperature of at least 70°C. The relative humidity is preferably at least 80%.

It is pointed out that the temperature and humidity are, of course, chosen having regard to the size of the granules containing the calcium oxide to be treated. A particle size of approximately 1 to 50 mm has been found to be very expedient in this connection.

Preferably, the slag material according to the invention is deactivated in a rotary kiln. The slag material can then be treated immediately following its formation, as a result of which an interim storage is superfluous.

By deactivating the slag material in a humid atmosphere in the presence of a substance which prevents the formation of a layer which retards water permeation, the slag material also containing magnesium in addition to calcium oxide can be deactivated expediently and in a short time.

It is pointed out that, if the layer which retards water permeation is based on magnesium oxide, said layer can be rendered water-permeable by using a moist atmosphere containing carbon dioxide. This is not, however, to be preferred because the bicarbonate then formed can easily be leached out during the subsequent storage of the treated material.

Expediently, the material to be treated according to the invention is composed of steel slags.

The invention is explained in greater detail by reference to the following example.

### Treatment of steel slags

The steel slags used originated from a blast furnace and also contained magnesium, possibly in bound form, in addition to calcium oxide. Said magnesium probably originates from the material used as furnace lining material; the amount of magnesium in the steel slags is therefore small. Nevertheless it usually took almost a year during breakdown in air for the slags to be completely deactivated.

The steel slags were first comminuted to a particle size of 1 to 50 mm and then mixed with a suitable amount of magnesium complexing agent. This mixture was then fed to a rotary kiln in which a temperature of 75°C and a relative humidity of 80% were maintained. The kiln was rotated at a speed of 6-10 revolutions per minute.

After a retention of approximately three hours in the rotary kiln, free CaO can no longer be detected in the steel slags.

It is pointed out that the necessary retention time in the rotary kiln can be shortened to some extent by increasing the temperature and reducing the particle size of the material to be deactivated.

It will also be clear to the person skilled in the art that the material which is added to prevent the formation of a layer which retards water permeation is not restricted to the abovementioned complex-forming substances; any material with preferentially binds magnesium or magnesium oxide so that it cannot contribute to the formation of a thin layer which retards water permeation is satisfactory for the present purpose.

## Claims

1. Method of deactivating granules containing at least calcium oxide present in slag material by bringing the slag material, optionally at elevated temperature, into contact with water, **characterised in that** magnesium containing slag material, optionally in comminuted form, is brought into contact with water in the presence of a magnesium complexing agent or a clathrate to prevent the formation of a thin layer which retards water permeation around the said granules.

2. Method according to claim 1, **characterised in that** the slag material is deactivated at elevated temperature.

3. Method according to claim 1, **characterised in that** the slag material is continuously deactivated at a temperature of at least 70 °C and a relative humidity of at least 80%.

4. Method according to claim 1, **characterised in that** slag material having a particle size of 1 to 50 mm is used.

5. Method according to claim 1, **characterised in that** the slag material is continuously deactivated in a rotary kiln.

## Patentansprüche

1. Verfahren zum Desaktivieren von Granulat, das zumindest Calciumoxid in Schlackenmaterial enthält, indem das Schlackenmaterial, möglicherweise bei erhöhter Temperatur, mit Wasser in Berührung gebracht wird, dadurch gekennzeichnet, daß Magnesium enthaltendes Schlackenmaterial, möglicherweise in zerkleinerter Form, in Gegenwart eines einen Magnesiumkomplex bildenden Stoffes oder eines Clathrates mit Wasser in Berührung gebracht wird, um die Bildung einer dünnen Schicht zu verhindern, welche den Wasserdurchtritt rings um das genannte Granulat verzögert.

2. Verfahren nach Anpsruch 1, dadurch gekennzeichnet, daß das Schlackenmaterial bei erhöhter Temperatur desaktiviert wird.

3. Verfahren nach Anspruch 1, dadurch gekennzeichnet, daß das Schlackenmaterial kontinuierlich bei einer Temperatur von zumindest 70°C und einer relativen Feuchte von zumindest 80% desaktiviert wird.

4. Verfahren nach Anspruch 1, dadurch gekennzeichnet, daß Schlackenmaterial mit einer Teilchengröße von 1 bis 50 mm verwendet wird.

5. Verfahren nach Anspruch 1, dadurch gekennzeichnet, daß das Schlackenmaterial kontinuierlich in einem Drehofen desaktiviert wird.

## Revendications

1. Méthode de désactivation de granules contenant d'au moins l'oxyde de calcium, présentes dans les scories, par la mise en contact des scories, éventuellement à une température élevée, avec de l'eau, caractérisée en ce que les scories contenant du magnésium, éventuellement sous forme broyée, sont mises en contact avec de l'eau en présence d'un clathrate ou d'un agent de complexation du magnésium pour empêcher la formation d'une couche mince qui retarde la pénétration de l'eau autour desdites granules.

2. Méthode selon la revendication 1, caractérisée en ce que les scories sont désactivées à une température élevée.

3. Méthode selon la revendication 1, caractérisée en ce que les scories sont désactivées en continue à une température d'au moins 70°C et une humidité relative d'au moins 80%.

4. Méthode selon la revendication 1, caractérisée en ce que les scories ont une taille de particules de 1 à 50 mm.

5. Méthode selon la revendication 1, caractérisée en ce qu'on désactive les scories en continue dans un four rotatif.
